**Europäisches Patentamt**

**European Patent Office**

**Office européen des brevets**

(19)

(11) Veröffentlichungsnummer: **0 199 340 B1**

(12)       **k EUROPÄISCHE PATENTSCHRIFT**

(45) Veröffentlichungstag der Patentschrift:
14.11.90

(21) Anmeldenummer: 86105541.6

(22) Anmeldetag: 22.04.86

(51) Int. Cl.⁵: **B29C 47/40, B29C 47/60,**
B29B 9/06, B29C 47/12
// B29K105:22

(54) **Vorrichtung zum Herstellen von hochwärmebeständigen, gut wärmeleitenden, elektrisch isolierenden Kunstoffen unter Verwendung eines Doppelschnecken-Extruders.**

(30) Priorität: 24.04.85 DE 3514854

(43) Veröffentlichungstag der Anmeldung:
29.10.86 Patentblatt 86/44

(45) Bekanntmachung des Hinweises auf die Patenterteilung:
14.11.90 Patentblatt 90/46

(84) Benannte Vertragsstaaten:
AT BE CH DE FR GB IT LI LU NL SE

(56) Entgegenhaltungen:
DE-B- 1 029 557
DE-C- 845 262
FR-A- 2 512 035

W. MINK: "Grundzüge der Extrudertechnik",
Seiten 27-30, Rudolf Zechner Verlag GmbH, 1964,
Speyer/Rhein - Wien - Zürich
Kunststofftaschenbuch, 22. Ausgabe, Seiten 132-145,
Carl Hanser Verlag, 1983, München - Wien

(73) Patentinhaber: **Siemens Aktiengesellschaft,**
**Wittelsbacherplatz 2, D-8000 München 2(DE)**

(72) Erfinder: **Schmidt, Hans Friedrich, Dr., Graf**
**Tattenbachweg 3, D-8196 Eurasburg(DE)**
Erfinder: **Von Tomkewitch, Sybille, Ascheringer-Weg 4,**
**D-8134 Pöcking(DE)**

## Beschreibung

Die Erfindung betrifft eine Vorrichtung zum Herstellen von hochwärmebeständigen, gut wärmeleitenden, elektrisch isolierenden Kunststoffen, bestehend aus Polymer/Metallwerkstoffen und zulegierten Hochtemperatur-Thermoplasten, bei der das Zulegieren in einem Doppelschnecken-Extruder mit kämmenden, gegenläufigen Schnecken in paralleler Anordnung und stufenlos abnehmender Kanalbreite erfolgt.

Kunststoffe der obengenannten Art sind allgemein bekannt und enthalten Aluminium-Polyolefin-Mischungen, denen wegen der nicht ausreichenden Wärmebeständigkeit der Polyolefine Polymere in Form von Hochtemperatur-Thermoplasten zugemischt werden.

Hochtemperatur-Thermoplaste erfordern Verarbeitungstemperaturen, die mehr als 200°C über der Schmelztemperatur des Polyolefins der Mischung liegen können. Der Anteil dieses Hochtemperaturwerkstoffes muß so klein wie möglich gehalten werden, um den prozentualen Anteil des Aluminiums nicht zu stark zu erniedrigen und somit die Wärmeleitfähigkeit nicht zu verschlechtern. Wird das Zulegieren nach den üblichen Compoundierungsverfahren in Ein-oder Doppelschnecken-Extrudern, wie sie beispielsweise bezüglich Aufbau und Wirkungsweise im Kunstoff-Taschenbuch, 22. Ausgabe, Karl Hauser Verlag, München-Wien, Seite 132 bis 145 und im Lexikon der Fertigungstechnik, Band 9, Deutsche Verlagsanstalt Stuttgart (1968), auf den Seiten 277 bis 279 beschrieben sind, durchgeführt, so werden, bedingt durch die hohe Verarbeitungstemperatur und den hohen Aluminiumanteil die Aluminiumpartikel derart zerschert, daß die aus dem fertigen Compound hergestellten Spritzgußteile und Extrudate nicht mehr elektrisch isolierend sind. Der Füllstoff lagert sich durch Sedimentation in der Austragszone des Extruders ab und führt zur Verstopfung der Düse.

Der Erfindung liegt deshalb die Aufgabe zugrunde, eine Extrusionsvorrichtung der eingangs genannten Art, wie sie beispielsweise in der Anordnung und Geometrie der Doppelschnecken auf der Seite 144 des obengenannten Kunstoff-Taschenbuches zu entnehmen ist, so zu entwickeln, daß das zu extrudierende Material bei guter Durchmischung möglichst wenig zerschert wird und somit seine elektrisch isolierenden Eigenschaften behält. Eine elektrisch isolierende Polymermischung mit einem Aluminiumanteil von mindestens 60 Vol % sollte entmischungsfrei herstellbar sein.

Diese Forderung wird durch eine Vorrichtung erfüllt, die erfindungsgemäß gekennzeichnet ist durch

a) ein Längen/Durchmesser-Verhältnis (L/D) der Schnecken von kleiner 20,

b) stumpfen Schnecken-Enden in der Austragszone am Kopf des Extruders,

c) die Lage mindestens einer Eintrittsöffnung im nachfolgenden, als Form-Werkzeug oder Spritzkopf ausgebildeten Anbauteil unmittelbar vor dem Bereich, der im Eingriff der beiden Schnecken liegt.

Auf diese Weise ist es möglich, die Komponenten mit geringstem Druck und somit geringster Scherung homogen zu mischen. Eine hochgefülltes Material kann mit möglichst geringem Druckaufbau extrudiert werden, ohne daß sich das Material entmischt, sich der Füllstoff (Aluminium-Partikel) in der Austragzone sedimentiert und die Aluminium-Partikel zerschert werden.

Weitere Ausgestaltungen der Erfindung ergeben sich aus den Unteransprüchen.

Die Figuren 1 bis 3 zeigen in Schnittbildern die Austragszone eines Doppelschnecken-Extruders nach der Erfindung. Dabei zeigt

die Figur 1 den Kopf des Extruders mit angeschlossenem Werkzeug,
die Figur 2 den Schnitt II - II durch Figur 1 und
die Figur 3 den Schnitt III - III durch Figur 1.

Es gelten für gleiche Teile gleiche Bezugszeichen.

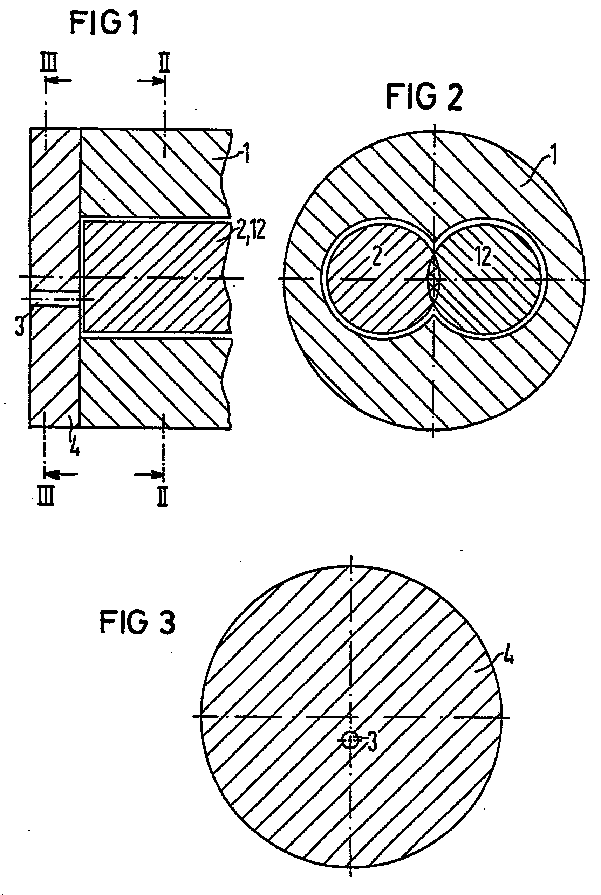

In der Figur 1 ist mit dem Bezugszeichen 1 der Zylinder des Extruders, mit 2 und 12 die beiden Schnecken und mit 3 die Öffnung (Düse) im Werkzeug 4 bezeichnet. Wie aus der Figur zur entnehmen ist, enden die Schnecken 2, 12 direkt in der Eintrittsöffnung 3 des als Formgebungsteil ausgebildeten Werkzeugs 4.

Die Figur 2 zeigt deutlich die Lage der abgestumpften Enden der beiden Schnecken 2, 12 im Zylinder 1.

Aus Figur 3 ist eine außermittig angebrachte Eintrittsöffnung 3 im Werkzeug 4 ersichtlich.

Ausführungsbeispiel:

Mit der Vorrichtung wurde eine Mischung extrudiert, die aus 90 Gew.-% eines Produktes mit 72 Vol % Aluminium und 28 Vol % Polyethylen (PE) und 10 Gew. % Polyethylenterephtalat (PETP ultradur A 1550 der Fa. BASF) besteht. Der Anteil des PETP wurde < 11 Gew. % gewählt, um den Anteil des Aluminium größer 60 Vol % zu halten.

Spritzgußteile hergestellt aus diesem Compound besitzen bei einem spezifischen Durchgangswiderstand $\gamma_D > 10^{12} \Omega$ eine Wärmeleitfähigkeit $\lambda$ von größer 4 W/mk (=Watt/meter Kelvin). Sie können verwendet werden für Kühlkörper, Gehäuse und Umhüllungen für die Leistungselektronik.

## Patentansprüche

1. Vorrichtung zum Herstellen von hochwärmebeständigen, gut wärmeleitenden, elektrisch isolierenden Kunststoffen, bestehend aus Polymer/Metallwerkstoffen und zulegierten Hochtemperatur-Thermoplasten, bei der das Zulegieren in einem Doppelschnecken-Extruder mit kämmenden, gegenläufigen Schnecken (2, 12) in paralleler Anordnung und stufenlos abnehmender Kanalbreite erfolgt, **gekennzeichnet durch**

a) ein Längen/Durchmesser-Verhältnis (L/D) der Schnecken (2, 12) von kleiner 20,

b) stumpfe Schnecken-Enden (2, 12) in der Austragszone am Kopf des Extruders, und

c) die Lage mindestens einer Eintrittsöffnung (3) im nachfolgenden, als Form-Werkzeug oder Spritzkopf ausgebildeten Anbauteil (4) unmittelbar vor dem Bereich, der im Eingriff der beiden Schnecken (2, 12) liegt.

2. Vorrichtung nach Anspruch 1, **dadurch gekennzeichnet**, daß die Eintrittsöffnung (3) außermittig im Werkzeug (4) angebracht ist.

3. Vorrichtung nach Anspruch 1 oder 2, **dadurch gekennzeichnet**, daß das L/D-Verhältnis zwischen 15 und 18 liegt.

## Claims

1. Apparatus for producing high temperature resistant, well thermally conducting, electrically insulating plastics composed of polymer/metal materials and alloyed high temperature thermoplastics, in which the alloying takes place in a twin screw extruder having parallel, intermeshing, counter-rotating screws (2, 12) of smoothly decreasing channel width, characterized in that
   a) the length/diameter (L/D) ratio of the screws (2, 12) is less than 20,
   b) the screw ends (2, 12) in the discharge zone at the extruder head are blunt, and
   c) the position of at least one delivery opening (3) in the subsequent add-on piece (4) forming the mould or extrusion head is immediately in front of the region which is by the two screws (2, 12).

2. Apparatus according to Claim 1, characterized in that the delivery opening (3) is located off-centre in the mould (4).

3. Apparatus according to Claim 1 or 2, characterized in that the L/D ratio is between 15 and 18.

## Revendications

1. Dispositif de production de matières plastiques résistantes aux hautes températures, bonnes conductrices de la chaleur, électriquement isolantes et constituées de matériaux polymère/métal additionnés de matières thermoplastiques résistant aux hautes températures, dans lequel l'addition s'effectue dans une extrudeuse à double vis, ayant des vis (2, 12) qui engrènent l'une dans l'autre, qui tournent en sens inverse, qui sont parallèles et avec une largeur de canal qui diminue de façon continue, caractérisé par
   a) un rapport longueur/diamètre (L/D) des vis (2, 12) inférieur à 20,
   b) des extrémités de vis (2, 12) tronquées dans la zone de décharge en tête de l'extrudeuse, et
   c) la présence d'au moins un orifice de sortie dans la partie rapportée constituée en un outil de moulage ou en une tête d'injection, et juste en amont de la région qui se situe au niveau de l'emprise des deux vis.

2. Dispositif suivant la revendication 1, caractérisé en ce que l'ouverture d'entrée (3) est disposée de manière excentrée dans l'outil (4).

3. Dispositif suivant la revendication 1 ou 2, caractérisé en ce que le rapport L/D est compris entre 15 et 18.

FIG 1

FIG 2

FIG 3